# EUROPÄISCHE PATENTSCHRIFT

(11) **EP 3 416 266 B1**
(45) Veröffentlichungstag und Bekanntmachung des Hinweises auf die Patenterteilung: **23.06.2021**
(21) Anmeldenummer: 18170089.9
(22) Anmeldetag: 30.04.2018
(51) Int. Cl.: H02K 3/50, H02K 15/00, H02K 3/12

(54) **STATORANORDNUNG FÜR EINE ELEKTRISCHE MASCHINE MIT STECKELELEMENTEN, VERFAHREN ZUR HERSTELLUNG EINES STECKELELEMENTS, STECKELELEMENT UND WERKZEUG**
STATOR ASSEMBLY FOR AN ELECTRIC MACHINE WITH CONNECTOR ELEMENTS, METHOD FOR PRODUCING A CONNECTOR ELEMENT, CONNECTOR ELEMENT AND TOOL
DISPOSITIF DE STATOR POUR UNE MACHINE ÉLECTRIQUE POURVUE D'ÉLÉMENTS ENFICHABLES, PROCÉDÉ DE FABRICATION D'UN ÉLÉMENT ENFICHABLE, ÉLÉMENT ENFICHABLE ET OUTIL

(30) Priorität: 16.06.2017 DE 102017210132
(43) Veröffentlichungstag der Anmeldung: 19.12.2018
(73) Patentinhaber: Robert Bosch GmbH, 70442 Stuttgart (DE)
(72) Erfinder: Brandt, Dirk, 31079 Sibbesse (DE); Roescher, Reiner, 12307 Berlin (DE); Schock, Wolfram, 72770 Ohmenhausen (DE); Oelkers, Benedikt, 31177 Harsum (DE); Wehling, Florian, 31180 Giesen (DE)

(56) Entgegenhaltungen:
- EP-A1- 3 088 124
- EP-A2- 1 571 750
- US-A- 685 966
- US-B1- 6 208 058
- US-B1- 6 252 326

## Beschreibung

### Stand der Technik

Die vorliegende Erfindung betrifft eine Statoranordnung für eine elektrische Maschine mit Steckelementen zur Stromumkehr. Ferner betrifft die vorliegende Erfindung ein Verfahren zur Herstellung eines Steckelements zur Stromumkehr für eine Statoranordnung. Ferner betrifft die vorliegende Erfindung ein Steckelement zur Stromumkehr für eine Statoranordnung einer elektrischen Maschine. Außerdem betrifft die vorliegende Erfindung ein Werkzeug zur Herstellung eines Steckelements.

Statoren als Teilprodukt von Elektromotoren, benötigen, je nach Auslegung, eine bestimmte Anzahl von Abgängen zum Anschluss und zur Verschaltung. Diese Abgänge müssen in Abhängigkeit vom Bauraum in allen anderen Komponenten eingeplant werden.

Bei bestimmten Auslegungen muss der Strom umgeleitet werden, wofür bei der Stecktechnik sogenannte "Umkehrverbinder" benötigt werden. Diese Umkehrverbinder können aufgrund ihrer Lage nicht, wie der Wickelkopf, geschränkt werden, um diesen zu komprimieren, weshalb sie mehr Bauraum benötigen.

Bei bekannten Produktkonzepten werden die Umkehrverbinder in den Innendurchmesser des Stators gebogen um die Höhe des Teilproduktes zu verkleinern.

US 6 208 058 B1 offenbart eine Statoranordnung mit U-förmig Steckelemente.

US 6 252 326 B1 offenbart eine Statoranordnung mit U-förmig Steckelemente die verschiedene Biegungswinkeln aufweist.

EP 3 088 124 A1 offenbart ein Verfahren zur Herstellung eines Steckelements.

EP 1 571 750 A2 offenbart eine Statoranordnung mit U-förmig Steckelemente zur Stromumkehr.

US 685 966 A offenbart ein Steckelement sowie ein Verfahren um dieser Steckelement herzustellen wo der Steckelement besteht aus zwei parallele Abschnitte die sich auf eine ebene erstrecken und ein weiterer Abschnitt der sich aus dieser Ebene gebogen ist, wobei eine Biegung des ersten Bereichs einem Radius folgt, der größer ist als ein Radius einer Biegung des dritten Bereichs.

### Offenbarung der Erfindung

Die Erfindung geht aus von einer Statoranordnung nach Gattung des unabhängigen Anspruchs 1. Ferner geht die Erfindung aus von einem Verfahren zur Herstellung eines Steckelements nach Gattung des unabhängigen Anspruchs 2. Ferner geht die Erfindung aus von einem Steckelement nach Gattung des unabhängigen Anspruchs 3.

Die erfindungsgemäße Statoranordnung für die elektrische Maschine weist einen zylindrischen Statorkörper auf. Der Statorkörper weist benachbarte Steckplätze auf, in die Steckelemente zur Stromumkehr eingesetzt sind, wobei die Steckelemente einen ersten Abschnitt mit einem ersten Ende, einen zweiten u-förmig ausgebildeten Abschnitt und einen dritten Abschnitt mit einem zweiten Ende aufweisen, wobei der zweite Abschnitt zwischen dem ersten Abschnitt und dem dritten Abschnitt angeordnet ist, und wobei sich der erste Abschnitt und der dritte Abschnitt in einer Ebene erstrecken und der zweite Abschnitt zumindest teilweise aus der Ebene gebogen ist.

Unter einem Stator/einer Statoranordnung kann der feststehende und unbewegliche Teil einer elektrischen Maschine verstanden werden. Das Gegenstück zum Stator ist ein Rotor, der als sich drehender (rotierender) Teil einer Maschine verstanden werden kann. Unter einem Steckelement zur Stromumkehr kann ein Umkehrverbinder verstanden werden.

Vorzugsweise ist die sich in zwei Dimensionen ersteckende Ebene durch ein x-y-Koordinatensystem definiert. Mit anderen Worten erstreckt sich das Bauteil in einer Ebene, die durch das x-y-Koordinatensystem bestimmt ist.

Der zweite Abschnitt ist zumindest teilweise aus der Ebene gebogen. Mit anderen Worten ist der zweite Abschnitt aus der x-y-Ebene gedrückt und ragt damit zumindest teilweise aus der x-y-Ebene in eine z-Richtung, die orthogonal zur x-y-Ebene orientiert ist.

Vorzugsweise sind der erste Abschnitt und der dritte Abschnitt linear verlaufend ausgebildet, d.h. beide Anschnitte sind gerade verlaufend in eine Längsrichtung orientiert. Bevorzugt sind der erste Abschnitt und der dritte Abschnitt parallel zueinander angeordnet. Besonders bevorzugt sind der erste Abschnitt und der dritte Abschnitt als Endabschnitte des Steckelements ausgebildet.

Vorzugsweise ist der zweite Abschnitt gekröpft. Mit anderen Worten ist der zweite Abschnitt des Steckelements so gebogen, dass die nicht gebogenen Teile - also der erste Abschnitt und dritte Abschnitt - parallel verlaufen.

Bevorzugt sind der erste Abschnitt und der dritte Abschnitt parallel zur Statorachse bzw. Rotorachse in den Steckplätzen angeordnet. Besonders bevorzugt sind der erste Abschnitt und der dritte Abschnitt koaxial zur Statorachse bzw. Rotorachse in den Steckplätzen angeordnet.

Vorzugsweise besteht das Steckelement aus einem Metalldraht, der mit einer Isolierung versehen ist. Bevorzugt weist das Steckelement einen runden Querschnitt auf. Besonders bevorzugt weist weder der erste Abschnitt an seinem ersten Ende eine Isolierung auf, noch weist der dritte Abschnitt an seinem zweiten Ende eine Isolierung auf.

Durch das Vorsehen derart ausgebildeter Steckelemente (infolge eines 3D-Formens der Steckelemente) lassen sich Wickelkopfabmaße verringern. Die Steckelemente können in den Wickelkopf integriert und je nach Position, in Abhängigkeit vom Wickelschema ineinander gesteckt werden. Der nötige Bauraum wird reduziert.

Die Unteransprüche zeigen bevorzugte Weiterbildungen der Erfindung.

Vorteilhaft weist der zweite Abschnitt einen gebogenen ersten Bereich, einen linear verlaufenden zweiten Bereich und einen gebogenen dritten Bereich auf, wobei der zweite Bereich zwischen dem ersten Bereich und dem dritten Bereich angeordnet ist. Eine Biegung des ersten Bereichs folgt einem Radius, der größer ist als ein Radius einer Biegung des dritten Bereichs. Mit anderen Worten ist der dritte Bereich gegenüber dem ersten Bereich stärker gekrümmt bzw. gebogen. Hierdurch stellt sich ein Gefälle des zweiten Bereichs gegenüber dem ersten und dritten Abschnitt des Steckelements ein. Dabei erhält das Steckelement eine definierte Ausgestaltung, die es ermöglicht, mehrere gleich geformte Steckelemente der Reihe nach ineinandergreifend im Statorkörper anzuordnen.

Weiter vorteilhaft sind die Steckelemente untereinander berührungsfrei angeordnet. Bevorzugt sind die Steckelemente als im Statorkörper ineinandergreifende Steckelemente ausgebildet. Bevorzugt sind die ineinandergreifenden Steckelemente zueinander berührungsfrei angeordnet.

Weiter vorteilhaft sind zwischen den in den Statorkörper gesteckten Steckelementen jeweils zwei Steckplätze für zwei erste Abschnitte weiterer Steckelemente vorgesehen. Damit wird ein Ineinandergreifen der Steckelemente ermöglicht, was Bauraum einspart.

Weiter vorteilhaft sind die ersten Abschnitte der Steckelemente nacheinander in drei erste benachbarte Steckplätze gesteckt und die dritten Abschnitte der Steckelemente sind nacheinander in drei weitere benachbarte Steckplätze gesteckt, die an die drei ersten benachbarten Steckplätze anschließen. Damit sind drei benachbarte und ineinandergreifende Steckelemente im Statorkörper anordenbar.

Besonders bevorzugt lässt sich das Steckelement der Statoranordnung gemäß dem nachfolgend beschrieben Verfahren herstellen. Das zum Steckelement der Statoranordnung oben Vorgetragene lässt sich auch auf das Verfahren übertragen.

Das erfindungsgemäße Verfahren zur Herstellung eines Steckelements zur Stromumkehr für eine Statoranordnung einer elektrischen Maschine weist die nachfolgenden Schritte auf:
- Biegen eines isolierten Drahtes zu einem sich in einer Ebene erstreckenden Bauteil, wobei das Bauteil einen ersten Abschnitt mit einem ersten Ende, einen zweiten u-förmig ausgebildeten Abschnitt und einen dritten Abschnitt mit einem zweiten Ende aufweist, wobei der zweite Abschnitt zwischen dem ersten Abschnitt und dem dritten Abschnitt angeordnet ist, und
- Weiterbiegen des Bauteils zu einem Steckelement, wobei der zweite Abschnitt zumindest teilweise aus der Ebene gebogen wird.

Vorzugsweise kann vor oder nach dem Biegen des isolierten Drahtes zum Bauteil ein Abisolieren des ersten Endes des ersten Abschnitts und des zweiten Endes des dritten Abschnitts des Bauteils erfolgen. Alternativ kann das Abisolieren des ersten Endes des ersten Abschnitts und des zweiten Endes des dritten Abschnitts auch nach dem Weiterbiegen des Bauteils zum Steckelement erfolgen. Bevorzugt ist unter dem Bauteil ein Grundkörper zu verstehen.

Weiter vorteilhaft weist nach dem Biegen der zweite Abschnitt einen gebogenen ersten Bereich, einen linear verlaufenden zweiten Bereich und einen gebogenen dritten Bereich auf, wobei der zweite Bereich zwischen dem ersten Bereich und dem dritten Bereich angeordnet ist. Eine Biegung des ersten Bereichs folgt einem Radius, der größer ist als ein Radius einer Biegung des dritten Bereichs.

Mit anderen Worten ist der dritte Bereich gegenüber dem ersten Bereich stärker gekrümmt bzw. gebogen.

Weiter vorteilhaft kann das Biegen mittels eines ersten Werkzeugs, insbesondere einer Biegevorrichtung erfolgen und/oder das Weiterbiegen kann mittels eines zweiten Werkzeugs, insbesondere eines Prägewerkzeugs oder einer Biegevorrichtung erfolgen. Damit kann eine Formgebung des Bauteils, bzw. des Steckelements auf einfache Weise erfolgen.

Vorzugsweise erfolgt nach einem Weiterbiegen des Bauteils zu einem Steckelement ein Einsetzen des Steckelements in die dafür vorgesehenen Steckplätze der Statoranordnung.

Das erfindungsgemäße Steckelement zur Stromumkehr für eine Statoranordnung einer elektrischen Maschine lässt sich gemäß dem Verfahren herstellen.

Das erfindungsgemäße Werkzeug dient der Herstellung, der Formgebung bzw. der Biegung eines Steckelements. Vorzugsweise ist das Werkzeug ein zweiteilig ausgebildetes Prägewerkzeug.

### Kurze Beschreibung der Zeichnung

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines zweidimensional gebogenen Bauteils,
- Figur 2: eine weitere schematische Ansicht des zweidimensional gebogenen Bauteils mit abisolierten Bereichen,
- Figur 3: eine schematische Ansicht eines dreidimensionalen Steckelements mit den abisolierten Bereichen, das nach einem erfindungsgemäßen Verfahren hergestellt ist,
- Figur 4: eine Teilansicht einer Statoranordnung gemäß einer erfindungsgemäßen Ausführungsform,
- Figur 5: eine Frontalansicht eines Oberteils eines Werkzeugs zur Herstellung des Steckelements gemäß Figur 3,
- Figur 6: eine Frontalansicht eines Unterteils des Werkzeug zur Herstellung des Steckelements aus Figur 5,
- Figur 7: eine schematische Darstellung der Statoranordnung gemäß einer weiteren erfindungsgemäßen Ausführungsform.

### Ausführungsformen der Erfindung

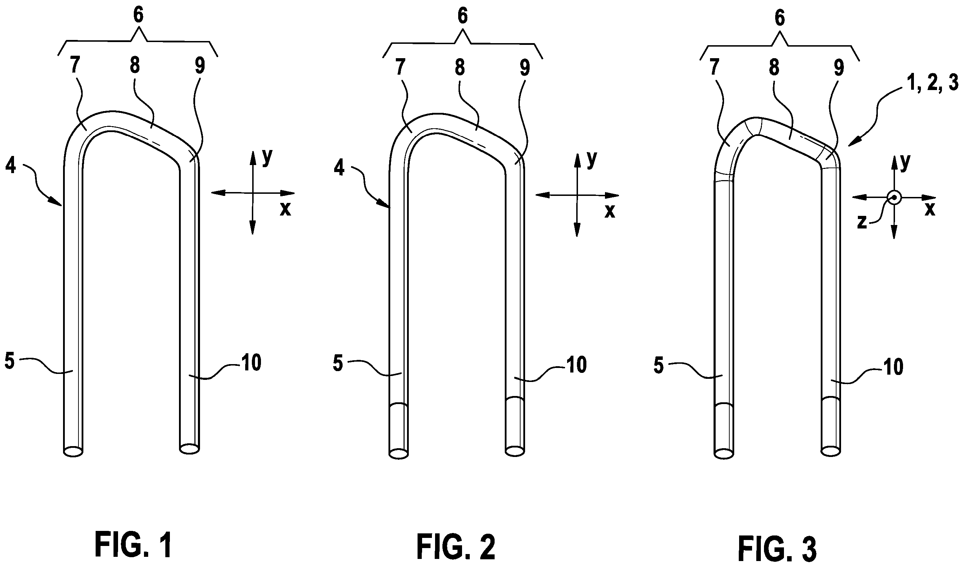

Figur 1 zeigt ein Bauteil 4. Das Bauteil 4 besteht aus einem mit einer Isolierung beschichteten Metalldraht. Der Metalldraht ist bspw. mittels einer Biegemaschine zum Bauteil 4 gebogen, wie in Figur 1 gezeigt.

Abbildung 1 zeigt die Herstellung einer 3D-Form. Draht 1 wurde mit einer Biegevorrichtung in die richtige Form gebracht und danach mit dem Prägewerkzeug aus Abbildung 2 in die nötige 3D Form gepresst. Am Ende kann man 3 gleiche Drähte so ineinander stecken (Abbildung 3), dass Bauraum eingespart werden kann.

Das Bauteil 4 weist einen ersten Abschnitt 5 mit einem ersten Ende, einen zweiten u-förmig ausgebildeten Abschnitt 6 und einen dritten Abschnitt 10 mit einem zweiten Ende auf. Dabei ist der zweite Abschnitt 6 zwischen dem ersten Abschnitt 5 und dem dritten Abschnitt 10 angeordnet. Der erste Abschnitt 5 und der dritte Abschnitt 10 erstrecken sich in einer Ebene. Die Ebene wird durch ein x-y-Koordinatensystem definiert. Mit anderen Worten erstreckt sich das Bauteil in einer horizontalen Ebene, die durch das x-y-Koordinatensystem bestimmt ist.

Der zweite Abschnitt 6 weist einen gebogenen ersten Bereich 7, einen linear verlaufenden zweiten Bereich 8 und einen gebogenen dritten Bereich 9 auf. Der zweite Bereich 8 ist zwischen dem ersten Bereich 7 und dem dritten Bereich 9 angeordnet.

Der erste Bereich 7 folgt einer Biegung mit einem Radius, der größer ist als ein Radius einer Biegung des dritten Bereichs 9. Damit ist der dritte Bereich 9 gegenüber dem ersten Bereich 7 stärker gekrümmt. Hierdurch entsteht die in Figur 1 gezeigte Form des Bauteils 4.

Der erste Abschnitt 5 und der dritte Abschnitt 10 sind linear verlaufend ausgebildet, d.h. beide Anschnitte 5, 7 erstrecken sich in eine Längsrichtung, nämlich einer y-Achse gemäß in Figur 1.

Der erste Abschnitt 7 und der dritte Abschnitt 10 sind parallel zueinander angeordnet. Der erste Abschnitt 7 und der dritte Abschnitt 10 können als Endabschnitte des Bauteils 4 verstanden werden.

In Figur 2 weist weder der erste Abschnitt 5 an seinem ersten Ende eine Isolierung auf, noch weist der dritte Abschnitt 10 an seinem zweiten Ende eine Isolierung auf.

In Figur 3 ist das Bauteil nach einem weiteren Biegevorgang gezeigt. Der zweite Abschnitt 6 ist zumindest teilweise aus der Ebene gebogen. Mit anderen Worten ist der zweite Abschnitt 6 aus der x-y-Ebene gedrückt und ragt damit zumindest teilweise aus der x-y-Ebene in eine z-Richtung, die orthogonal zur x-y-Ebene orientiert ist. Dadurch erhält das Steckelement 1, 2, 3 eine definierte

Ausgestaltung, die es ermöglicht, mehrere gleich geformte Steckelemente 1, 2, 3 der Reihe nach ineinandergreifend in einem Statorkörper anzuordnen.

Zur Herstellung des Steckelements 1, 2, 3 zur Stromumkehr für eine Statoranordnung 15 einer elektrischen Maschine werden die nachfolgenden

Schritte durchlaufen:
- Biegen eines isolierten Drahtes zu einem sich in einer Ebene erstreckenden Bauteil 4, wobei das Bauteil 4 einen ersten Abschnitt 5 mit einem ersten Ende, einen zweiten u-förmig ausgebildeten Abschnitt 6 und einen dritten Abschnitt 10 mit einem zweiten Ende aufweist, wobei der zweite Abschnitt 6 zwischen dem ersten Abschnitt 5 und dem dritten Abschnitt 10 angeordnet ist, wobei nach dem Biegen der zweite Abschnitt 6 einen gebogenen ersten Bereich 7, einen linear verlaufenden zweiten Bereich 8 und einen gebogenen dritten Bereich 9 aufweist, wobei der zweite Bereich 8 zwischen dem ersten Bereich 7 und dem dritten Bereich 9 angeordnet ist und wobei der erste Bereich 7 einer Biegung mit einem Radius folgt, der größer ist als ein Radius einer Biegung des dritten Bereichs 9,
- Abisolieren des ersten Endes des ersten Abschnitts 5 und des zweiten Endes des dritten Abschnitts 10 und
- Weiterbiegen des Bauteils 2 zum Steckelement 1, 2, 3, wobei der zweite Abschnitt 6 zumindest teilweise aus der Ebene gebogen wird.

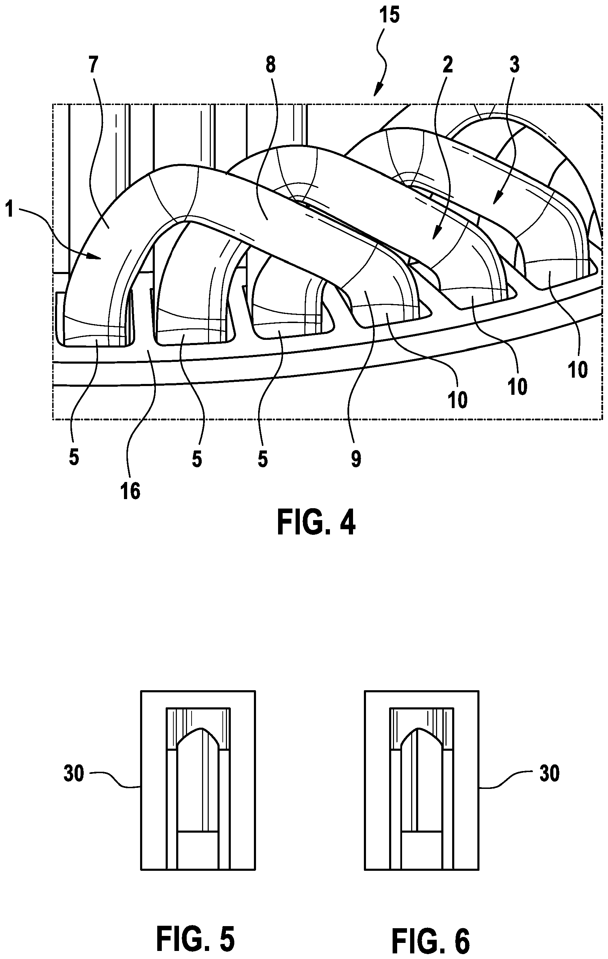

Zur Herstellung eines Steckelements 1, 2, 3 aus einem Bauteil 4 kann ein Werkzeug 30 verwendet werden, wie es in der Figur 5 gezeigt ist.

Figur 4 zeigt eine Teilansicht einer Statoranordnung 15 für eine elektrische Maschine mit einem zylindrischen Statorkörper 16. Im Statorkörper 16 sind Steckelemente 1, 2, 3 angeordnet. Der Statorkörper 16 weist benachbarte Steckplätze zur Aufnahme der Steckelemente 1, 2, 3 auf.

Zwischen den in den Statorkörper 16 eingesteckten Steckelementen 1, 2, 3 sind jeweils zwei Steckplätze für zwei erste Abschnitte 5 weiterer Steckelemente 1, 2, 3 vorgesehen. Steckelementen 1, 2, 3 sind dabei als im Statorkörper 16 ineinandergreifende Steckelemente 1, 2, 3 ausgebildet.

Die ersten Abschnitte 5 der Steckelemente 1, 2, 3 sind nacheinander in drei erste benachbarte Steckplätze gesteckt. Die dritten Abschnitte 10 der Steckelemente 1, 2, 3 sind nacheinander in drei weitere benachbarte Steckplätze gesteckt, die an die drei ersten benachbarten Steckplätze anschließen.

Die drei Steckelemente 1, 2, 3 werden dabei so aneinandergereiht, dass Bauraum eingespart werden kann. Am Beispiel der drei in die Steckplätze eingesetzten ineinandergreifenden Steckelemente 1, 2, 3 ergibt sich folgende Situation: Einem ersten Abschnitt 5 eines ersten Steckelements 1 folgt ein erster Abschnitt 5 eines zweiten Steckelements 2. Dem ersten Abschnitt 5 des zweiten Steckelements 2 folgt ein erster Abschnitt 5 eines dritten Steckelements 3. Dem ersten Abschnitt 5 des dritten Steckelements 3 folgt ein dritter Abschnitt 10 des ersten Steckelements 1. Dem dritten Abschnitt 10 des ersten Steckelements 1 folgt ein dritter Abschnitt 10 des zweiten Steckelements 2. Dem dritten Abschnitt 10 des zweiten Steckelements 2, 3 folgt ein dritter Abschnitt 10 des dritten Steckelements 3.

Sämtliche Steckelemente 1, 2, 3 sind berührungsfrei nebeneinander angeordnet. Der erste Abschnitt 5 und der dritte Abschnitt 10 der Steckelemente 1, 2, 3 sind parallel zu einer Längsachse der Statoranordnung 15 in den Steckplätzen angeordnet.

Figur 5 zeigt ein Unterteil eines Prägewerkzeugs 30. Figur 6 zeigt ein Oberteil des Prägewerkzeugs 30. Das Prägewerkzeug 30 ist eingerichtet, aus einem Bauteil 4 die Steckelemente 1, 2, 3 zu formen bzw. zu biegen. Hierzu weist das Prägewerkzeug 30 eine formgebende Struktur auf, die als Gegenstück zum Steckelement 1, 2, 3 ausgebildet ist.

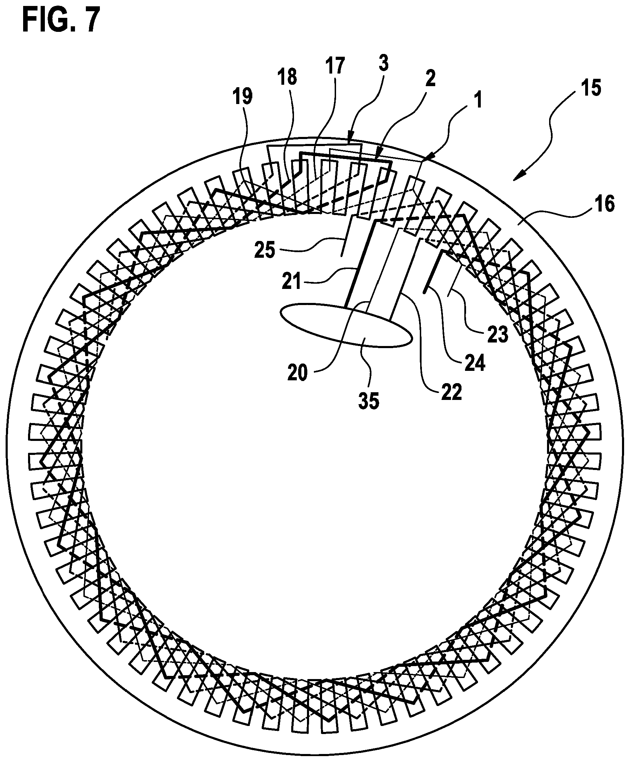

Figur 7 zeigt eine schematische Darstellung der Statoranordnung 15 für eine elektrische Maschine mit einem zylindrischen Statorkörper 16. In den Statorkörper 16 sind Steckelemente 1, 2, 3 zur Stromumkehr der Reihe nach eingesetzt, wie unter Figur 4 beschrieben.

Weiter weist die Statoranordnung 15 Wicklungen 17, 18, 19 auf (geschweißte Wicklungen sind gestrichelt dargestellt, gebogene Wicklungen sind ohne Unterbrechungen dargestellt). Die Wicklung 17 ist mit dem ersten Steckelement 1, die Wicklung 18 ist mit dem zweiten Steckelement 2 und die Wicklung 19 ist mit dem dritten Steckelement 3 verbunden.

Ferner weist die Statoranordnung 15 einen Stern 35 auf, der über Anschlüsse 20, 21, 22 mit den Wicklungen 17, 18, 19 verbunden ist. Außerdem weist die Statoranordnung 15 freie Enden 23, 24, 25 der Wicklungen 17, 18, 19 auf.

Während die vorliegende Erfindung anhand der beigefügten Figuren ausführlich und detailliert beschrieben worden ist, bleibt der Schutzbereich der vorliegenden Erfindung allein durch die beigefügten Ansprüche beschränkt.

## Patentansprüche

1. Statoranordnung (15) für eine elektrische Maschine mit einem zylindrischen Statorkörper (16),
wobei der Statorkörper (16) benachbarte Steckplätze aufweist, in die Steckelemente (1, 2, 3) zur Stromumkehr eingesetzt sind,
wobei die Steckelemente (1, 2, 3) einen ersten Abschnitt (5) mit einem ersten Ende, einen zweiten u-förmig ausgebildeten Abschnitt (6) und einen dritten Abschnitt (10) mit einem zweiten Ende aufweisen,
wobei der zweite Abschnitt (6) zwischen dem ersten Abschnitt (5) und dem dritten Abschnitt (10) angeordnet ist, und
wobei sich der erste Abschnitt (5) und der dritte Abschnitt (10) in einer Ebene erstrecken und der zweite Abschnitt (6) zumindest teilweise aus der Ebene gebogen ist, wobei
der zweite Abschnitt (6) einen gebogenen ersten Bereich (7), einen linear verlaufenden zweiten Bereich (8) und einen gebogenen dritten Bereich (9) aufweist,
wobei der zweite Bereich (8) zwischen dem ersten Bereich (7) und dem dritten Bereich (9) angeordnet ist, und
wobei beim Biegen eines isolierten Drahtes zu einem sich in der Ebene erstreckenden Bauteils (4) eine Biegung des ersten Bereichs (7) einem Radius folgt, der größer ist als ein Radius einer Biegung des dritten Bereichs (9), und ein Weiterbiegen des Bauteils (4) zum Steckelement (1, 2, 3) erfolgt, wobei der zweite Abschnitt (6) zumindest teilweise aus der Ebene gebogen wird (siehe Seite 8, Zeile 19 und 20), wobei das Weiterbiegen mittels eines zweiten Werkzeugs erfolgt, welches ein Prägewerkzeug (30) umfasst,
wobei die Steckelemente (1, 2, 3) als im Statorkörper (16) ineinandergreifende Steckelemente ausgebildet sind,
wobei die ersten Abschnitte (5) der Steckelemente (1, 2, 3) nacheinander in drei erste benachbarte Steckplätze gesteckt sind und die dritten Abschnitte (10) der Steckelemente (1, 2, 3) nacheinander in drei weitere benachbarte Steckplätze gesteckt sind, die an die drei ersten benachbarten (1, 2, 3) Steckplätze anschließen.

2. Verfahren zur Herstellung eines Steckelements (1, 2, 3) zur Stromumkehr für eine Statoranordnung (15) einer elektrischen Maschine aufweisend die nachfolgenden Schritte:
- Biegen eines isolierten Drahtes zu einem sich in einer Ebene erstreckenden Bauteil (4), wobei das Bauteil (4) einen ersten Abschnitt (5) mit einem ersten Ende, einen zweiten u-förmig ausgebildeten Abschnitt (6) und einen dritten Abschnitt (10) mit einem zweiten Ende aufweist, wobei der zweite Abschnitt (6) zwischen dem ersten Abschnitt (5) und dem dritten Abschnitt (10) angeordnet ist, und
- Weiterbiegen des Bauteils (4) zu einem Steckelement (1, 2, 3), wobei der zweite Abschnitt (6) zumindest teilweise aus der Ebene gebogen wird.
**dadurch gekennzeichnet, dass**
nach dem Biegen der zweite Abschnitt (6) einen gebogenen ersten Bereich (7), einen linear verlaufenden zweiten Bereich (8) und einen gebogenen dritten Bereich (9) aufweist, wobei der zweite Bereich (8) zwischen dem ersten Bereich (7) und dem dritten Bereich (9) angeordnet ist und wobei eine Biegung des ersten Bereichs (7) einem Radius folgt, der größer ist als ein Radius einer Biegung des dritten Bereichs (9),
wobei das Biegen mittels eines ersten Werkzeugs erfolgt, insbesondere einer Biegevorrichtung, und/oder das Weiterbiegen mittels eines zweiten Werkzeugs erfolgt, welches ein Prägewerkzeug (30) umfasst.

3. Steckelement (1, 2, 3) zur Stromumkehr für eine Statoranordnung (15) einer elektrischen Maschine hergestellt gemäß dem Verfahren nach Anspruch 2, wobei das Steckelement (1, 2, 3) einen ersten Abschnitt (5) mit einem ersten Ende, einen zweiten u-förmig ausgebildeten Abschnitt (6) und einen dritten Abschnitt (10) mit einem zweiten Ende aufweist,
wobei der zweite Abschnitt (6) zwischen dem ersten Abschnitt (5) und dem dritten Abschnitt (10) angeordnet ist, und
wobei sich der erste Abschnitt (5) und der dritte Abschnitt (10) in einer Ebene erstrecken und der zweite Abschnitt (6) zumindest teilweise aus der Ebene gebogen ist,
wobei der zweite Abschnitt (6) einen gebogenen ersten Bereich (7), einen linear verlaufenden zweiten Bereich (8) und einen gebogenen dritten Bereich (9) aufweist, wobei der zweite Bereich (8) zwischen dem ersten Bereich (7) und dem dritten Bereich (9) angeordnet ist.

## Claims

1. Stator arrangement (15) for an electric machine, having a cylindrical stator body (16),
wherein the stator body (16) has adjacent plug-in sockets into which plug-in elements (1, 2, 3) for current reversal are inserted,
wherein the plug-in elements (1, 2, 3) have a first portion (5) with a first end, a second, U-shaped portion (6) and a third portion (10) with a second end,
wherein the second portion (6) is arranged between the first portion (5) and the third portion (10), and
wherein the first portion (5) and the third portion (10) extend in a plane, and the second portion (6) is at least partially bent out of the plane, wherein the second portion (6) has a bent first region (7), a linearly extending second region (8) and a bent third region (9),
wherein the second region (8) is arranged between the first region (7) and the third region (9), and wherein, when bending an insulated wire to form a component (4) extending in the plane, a bending of the first region (7) follows a radius which is larger than a radius of a bending of the third region (9), and a further bending of the component (4) to form the plug-in element (1, 2, 3) is realized, wherein the second portion (6) is at least partially bent out of the plane (see page 8, lines 19 and 20), wherein the further bending is realized by means of a second tool, which comprises an embossing tool (30),
wherein the plug-in elements (1, 2, 3) are formed as plug-in elements interengaging in the stator body (16),
wherein the first portions (5) of the plug-in elements (1, 2, 3) are plugged one after the other into three first adjacent plug-in sockets, and the third portions (10) of the plug-in elements (1, 2, 3) are plugged one after the other into three further adjacent plug-in sockets, which follow the three first adjacent (1, 2, 3) plug-in sockets.

2. Method for producing a plug-in element (1, 2, 3) for current reversal for a stator arrangement (15) of an electric machine, comprising the following steps:
- bending an insulated wire to form a component (4) extending in a plane, wherein the component (4) has a first portion (5) with a first end, a second, U-shaped portion (6) and a third portion (10) with a second end, wherein the second portion (6) is arranged between the first portion (5) and the third portion (10), and
- bending the component (4) further to form a plug-in element (1, 2, 3), wherein the second portion (6) is at least partially bent out of the plane,
**characterized in that**
after the bending, the second portion (6) has a bent first region (7), a linearly extending second region (8) and a bent third region (9), wherein the second region (8) is arranged between the first region (7) and the third region (9), and wherein a bending of the first region (7) follows a radius which is larger than a radius of a bending of the third region (9),
wherein the bending is realized by means of a first tool, in particular a bending device, and/or the further bending is realized by means of a second tool, which comprises an embossing tool (30).

3. Plug-in element (1, 2, 3) for current reversal for a stator arrangement (15) of an electric machine produced according to the method according to Claim 2,
wherein the plug-in element (1, 2, 3) has a first portion (5) with a first end, a second, U-shaped portion (6) and a third portion (10) with a second end,
wherein the second portion (6) is arranged between the first portion (5) and the third portion (10), and
wherein the first portion (5) and the third portion (10) extend in a plane, and the second portion (6) is at least partially bent out of the plane, wherein the second portion (6) has a bent first region (7), a linearly extending second region (8) and a bent third region (9), wherein the second region (8) is arranged between the first region (7) and the third region (9).

## Revendications

1. Agencement de stator (15) pour une machine électrique muni d'un corps de stator cylindrique (16), le corps de stator (16) comprenant des emplacements d'enfichage voisins, dans lesquels des éléments d'enfichage (1, 2, 3) sont insérés pour l'inversion de courant,
les éléments d'enfichage (1, 2, 3) comprenant une première section (5) munie d'une première extrémité, une deuxième section (6) configurée en forme de u et une troisième section (10) munie d'une deuxième extrémité,
la deuxième section (6) étant agencée entre la première section (5) et la troisième section (10), et
la première section (5) et la troisième section (10) s'étendant dans un plan et la deuxième section (6) étant au moins partiellement courbée à partir du plan, la deuxième section (6) comprenant une première zone courbée (7), une deuxième zone linéaire (8) et une troisième zone courbée (9),
la deuxième zone (8) étant agencée entre la première zone (7) et la troisième zone (9), et
lors de la courbure d'un fil isolé en un composant (4) s'étendant dans le plan, une courbure de la première zone (7) suivant un rayon qui est supérieur à un rayon d'une courbure de la troisième zone (9), et une courbure supplémentaire du composant (4) en l'élément d'enfichage (1, 2, 3) ayant lieu, la deuxième section (6) étant au moins partiellement courbée à partir du plan (voir page 8, lignes 19 et 20), la courbure supplémentaire ayant lieu au moyen d'un deuxième outil, qui comporte un outil de gaufrage (30),
les éléments d'enfichage (1, 2, 3) étant configurés en tant qu'éléments d'enfichage s'engrenant les uns dans les autres dans le corps de stator (16),
les premières sections (5) des éléments d'enfichage (1, 2, 3) étant enfichées les unes après les autres dans trois premiers emplacements d'enfichage voisins et les troisièmes sections (10) des éléments d'enfichage (1, 2, 3) étant enfichées les unes après les autres dans trois emplacements d'enfichage voisins supplémentaires, qui sont contigus aux trois premiers emplacements d'enfichage voisins (1, 2, 3).

2. Procédé de fabrication d'un élément d'enfichage (1, 2, 3) pour l'inversion de courant pour un agencement de stator (15) d'une machine électrique, comprenant les étapes suivantes :
- la courbure d'un fil isolé en un composant (4) s'étendant dans un plan, le composant (4) comprenant une première section (5) munie d'une première extrémité, une deuxième section (6) configurée en forme de u et une troisième section (10) munie d'une deuxième extrémité, la deuxième section (6) étant agencée entre la première section (5) et la troisième section (10), et
- la courbure supplémentaire du composant (4) en un élément d'enfichage (1, 2, 3), la deuxième section (6) étant au moins partiellement courbée à partir du plan,
**caractérisé en ce que**
après la courbure, la deuxième section (6) comprend une première zone courbée (7), une deuxième zone linéaire (8) et une troisième zone courbée (9), la deuxième zone (8) étant agencée entre la première zone (7) et la troisième zone (9), et une courbure de la première zone (7) suivant un rayon qui est supérieur à un rayon d'une courbure de la troisième zone (9),
la courbure ayant lieu au moyen d'un premier outil, notamment d'un outil de courbure, et/ou la courbure supplémentaire ayant lieu au moyen d'un deuxième outil, qui comporte un outil de gaufrage (30) .

3. Élément d'enfichage (1, 2, 3) pour l'inversion de courant pour un agencement de stator (15) d'une machine électrique fabriqué par le procédé selon la revendication 2,
l'élément d'enfichage (1, 2, 3) comprenant une première section (5) munie d'une première extrémité, une deuxième section (6) configurée en forme de u et une troisième section (10) munie d'une deuxième extrémité, la deuxième section (6) étant agencée entre la première section (5) et la troisième section (10), et
la première section (5) et la troisième section (10) s'étendant dans un plan et la deuxième section (6) étant au moins partiellement courbée à partir du plan, la deuxième section (6) comprenant une première zone courbée (7), une deuxième zone linéaire (8) et une troisième zone courbée (9), la deuxième zone (8) étant agencée entre la première zone (7) et la troisième zone (9) .
